# EUROPEAN PATENT APPLICATION

(11) **EP 2 833 170 A1**
(43) Date of publication of application: **04.02.2015**
(21) Application number: 13768630.9
(22) Date of filing: 27.03.2013
(51) Int. Cl.: G02B 5/20, G02F 1/167

(54) **PRODUCTION METHOD FOR COLOR FILTER AND COLOR REFLECTIVE DISPLAY**

(30) Priority: 28.03.2012 JP 2012074907
(71) Applicant: Toppan Printing Co., Ltd., Tokyo 110-0016 (JP)
(72) Inventor: KONNO, Kodai, Tokyo 110-0016 (JP)
(74) Representative: TBK
(86) International application number: PCT/JP2013/059052
(87) International publication number: WO 2013/146902

(57) **Abstract**

In a method of manufacturing a color filter, colored pixels for the color filter is formed by using an ink-jet printing method and arraying a plurality of droplets at arbitrary intervals. In this method, droplets to be arrayed at the four corners of a colored pixel are coated and then droplets to be arrayed at other positions in the colored pixels are coated.

## Description

### [Technical Field]

The present invention relates to a method for manufacturing a color filter for use in a reflective display, for example, according to an ink-jet printing method and also to a color reflective display including the color filter.

### [Background Art]

In association with the spread of electronic information networks, electronic publications represented by electronic books have been recently utilized. For the devices displaying the electronic publication and electronic information, it is general to use light-emitting or backlight displays. However, when compared to a print-on-paper medium, these displays tend to cause fatigue due to ergonomics when used over a long period of time. In addition, these displays consume large electric power and have limitation in display time in the case of battery drive.

As a display that imposes a smaller burden on user's eyes than the light-emitting or backlight displays, reflective displays are used wherein display is performed by controlling reflected light based on ambient illumination or environmental light.

Various types of such reflective displays are used including a liquid crystal type, an electrophoretic type in which electrically charged fine particles are moved by electric field (e.g., PTL 1 (JP-B-2552783)), a twisting ball type in which two-color balls are rotated in electric field (e.g., PLT 2 (JP-B-2860790)), a polymer dispersed liquid crystal (PDLC) type in which the orientation state of liquid crystals that are dispersed in a resin is controlled by electric field (e.g., PLT 3 (JP-A-2001-092383)), and a polymer network liquid crystal (PNLC) type in which a resin component ratio is so small that a polymer in liquid crystals has a network structure (e.g., PLT 4 (JP-B-3178530)).

The reflective displays of these types are all able to control scattered reflections by means of an electric field. The reflective displays of these types have difficulty in color display, and in practice, use a color filter to realize color display.

In a method of using a color filter for colorization of such a reflective display, an interval between pixels of the color filter is preferably 1 to 20 µm (e.g., PLT 5 (JP-B-4415525)).

The method of PLT 5 includes a process of laminating a color filter substrate with an electrode substrate wherein unless these substrates are laminated with an amount of misalignment of less than 5 µm, high color saturation cannot be achieved. However, accurate lamination of a color filter substrate with an electrode substrate is difficult in view of the current technology.

Under these circumstances, a method of unnecessitating alignment has been proposed wherein color printing is performed directly on a reflective display by ink-jet printing to thereby eliminate the process of laminating a color filter with a reflective display. The ink-jet printing is non-contact printing, and is less influenced by foreign matters and is plate-free printing, so that costs can be more inexpensive than with the case of printing using a plate.

For the colorization of a reflective display, a method has been proposed wherein ink colored regions are ink-jet-printed on various types of surfaces such as of an electrooptic display or on a front plane laminate that is used for producing such a display (e.g., PLT (JP-A-2010-503895)).

In order to improve color reproducibility, the ink colored region preferably covers the entirety of a pixel. In the ink-jet printing method, droplets are spherically formed and thus, the entirety of a square pixel cannot be efficiently covered therewith, with some cases where a coloring-in-pixel rate may lower. Such a problem is not referred to in PLTs 1-6.

According to another method, banks are used to set up an ink colored region of a square form. However, this method includes an additional step of making the banks, which requires alignment accuracy for making the banks, while the banks are required to be made thin, leading to a possible increase of costs.

For a method of realizing the same color reproducibility at a low coloring-in-pixel rate as with the case where the coloring-in-pixel rate is high, there is known a method of increasing the concentration of an ink or the thickness of printed ink. However, this method may reduce (light) transmission of the ink and thus may lower reflectance.

The increase of the coloring-in-pixel rate enables the color reproducibility to be improved while keeping the reflectance in a color reflective display. However, a mere improvement of the coloring-in-pixel rate leads to the occurrence of color mixing due to the overlaps of pixels. In order to raise the coloring-in-pixel rate, while suppressing the occurrence of the color mixing, it is preferred to make the shape of each pixel close to a square.

### [Summary of the Invention]

### [Technical Problem]

The present invention has been made in light of the circumstances set forth above and has as its object to provide a method for manufacturing a color filter wherein colored portions formed by an ink jet printing method are formed as a square to enable the fabrication of a color filter for a reflective display having a high coloring-in-pixel rate and also a color reflective display.

### [Solution to Problem]

A method for manufacturing a color filter related to a first aspect includes arraying a plurality of droplets at arbitrary intervals by an ink-jet printing method to form colored pixels of a color filter. The method for manufacturing the color filter related to the first aspect includes coating droplets to be arrayed at four corners of a pixel to be colored, followed by coating droplets to be arrayed at other positions of the pixel to be colored.

In the first aspect, the volume of the droplets arrayed at four corners of the pixel may be not less than 1.2 times but not more than 6 times the volume of the droplets to be arrayed at other positions of the pixel.

In the first aspect, coating the droplets to be arrayed at four corners of a colored pixel may be followed by coating a droplet onto a center of the pixel to be colored. The volume of the droplet to be coated onto the center may be not less than 10 times but not more than 50 times the volume of the droplets to be arrayed at the four corners.

A method for manufacturing a color filter related to a second aspect includes arraying a plurality of droplets at arbitrary intervals by an ink-jet printing method to form colored pixels of a color filter. The method for manufacturing the color filter related to the second aspect includes coating droplets to be arrayed on one side and the opposed side of a pixel to be colored, followed by coating droplets to be arrayed at other positions of the pixel.

In the second aspect, the volume of the droplets to be arrayed on the one side and the opposed side may be not less than 1.2 times but not more than 6 times the volume of the droplets to be arrayed at other positions.

A color reflective display related to a third aspect includes the color filter layer manufactured using the method for manufacturing a color filter related to the first or second aspect. The color reflective display related to the third aspect includes a reflective display having a stacked configuration of an ink fixing layer and the color filter layer. The color reflective display satisfies a relation expressed by 1.15<a/b<1.41, wherein "a" is a length of a diagonal line in a colored pixel in the ink fixing layer and "b" is a maximum value of a minimum distance from one side to the opposed side of a colored pixel, and also satisfies a relation expressed by 1.42<a/c<2.0, wherein "c" is a minimum value of the minimum distance from one side to the opposed side of the colored pixel.

### [Advantageous Effects of the Invention]

According to the aspects of the present invention, there can be provided a method for manufacturing a color filter having a high coloring-in-pixel rate wherein the color filter has square colored portions formed by ink-jet printing, and also a color reflective display.

### [Brief Description of the Drawings]

[Fig. 1] is a schematic cross-sectional view illustrating an example of a layer configuration of a color reflective display related to an embodiment;
[Fig. 2] is a schematic perspective view illustrating an example of a configuration of an ink-jet coating apparatus related to an embodiment;
[Fig. 3] is an explanatory view illustrating a first example of a pixel shape and an ejection array pattern related to an embodiment;
[Fig. 4] is an explanatory view illustrating a second example of a pixel shape and an ejection array pattern related to an embodiment;
[Fig. 5A] is an explanatory view illustrating a third example of a pixel shape and an ejection array pattern related to an embodiment;
[Fig. 5B] is an explanatory view illustrating a fourth example of a pixel shape and an ejection array pattern related to an embodiment;
[Fig. 6] is a diagram illustrating an example of a relationship of nozzle holes to nozzle pitch in an ink-jet head;
[Fig. 7] is an explanatory view illustrating an example of multiphase division driving in an ink-jet head related to an embodiment; and
[Fig. 8] is a diagram illustrating a relationship between an ejection array pattern and a pixel shape related to examples.

### [Description of Embodiments]

### (First embodiment)

As stated above, reflective monochrome displays capable of monochromatic display include those of a liquid crystal type, an electrophoretic type, a twisting ball type, a polymer dispersed liquid crystal (PDLC) type, and a polymer network liquid crystal (PNLC) type. The present embodiment is described by way of an example of an electrophoretic reflective display. The embodiment is applicable to other types as well.

The present embodiment is now described with reference to the drawings.

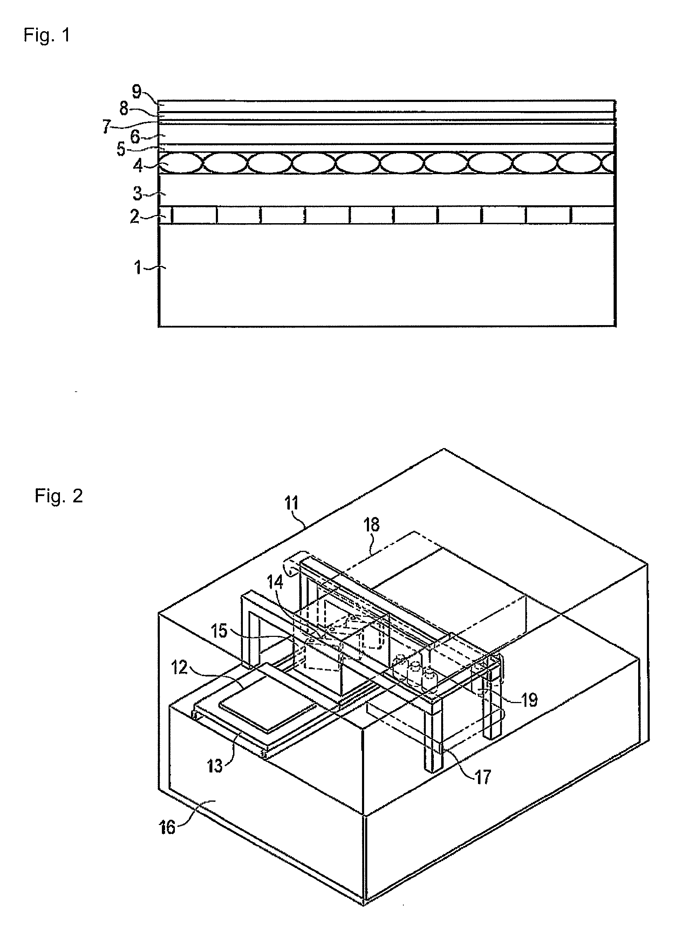

Fig. 1 is a schematic cross-sectional view illustrating an example of a layer configuration of an electrophoretic color reflective display related to the embodiment.

The color reflective display is configured by forming, on one surface of a substrate layer 1, an electrode layer 2, an adhesive layer 3, an electrophoretic material layer 4, a light transmissive electrode layer 5, a transparent plastic film 6, an ink fixing layer 7, a color filter layer 8 and a protective film 9 in this order.

The process of fabricating the electrophoretic color reflective display related to the embodiment includes, in addition to the fabrication step of an existing monochrome electrophoretic reflective display, a color printing step using an ink-jet printing method.

An electrophoretic reflective display called electronic paper includes, for example, a display described in JP-B-2551783. This reflective display includes a dispersion system containing electrophoretic particles and sealed between face-to-face electrode plates, each having at least one light transmissive surface. A display control voltage is applied between the opposed electrodes, so that optical reflection characteristics are changed to achieve desired display.

As shown in Fig. 1, the color reflective display related to the embodiment is configured by forming the ink fixing layer 7 on the transparent plastic film 6 of monochrome electronic paper, followed by forming the color filter layer 8 by ink-jet printing.

As the ink fixing layer 7 used, mention may be made, for example, of the ink-jet recording medium of JP-A-2000-043405 or the recording medium for an ink-jet printer described in JP-A-2008-272972. The ink fixing layer 7 should preferably be high in transparency. The ink fixing layer 7 should be transparent, should have such performances as not undergoing color change or discoloration, and should have various resistances. For example, vinyl resins, such as polyvinyl butyral and polyvinyl acetate, are used.

The material for the ink fixing layer 7 is coated, for example, by means of a coating device in a dry thickness of 0.1 to 10 µm. The coating device used includes, for example, a die coater, a spin coater or a bar coater. However, the manner of coating is not limited to these methods.

After coating, the material for the ink fixing layer 7 is solidified using a method such as of heating, vacuum or UV irradiation to thereby form the ink fixing layer 7.

In the present embodiment, coating an arbitrary pattern is performed using ink jetting in conformity with the substrate 1 in which an electrode (pixel) has been patterned.

Next, an example of the ink-jet coating apparatus used in the embodiment is briefly described.

Fig. 2 is a schematic perspective view illustrating an example of a configuration of the ink-jet coating apparatus. This ink-jet coating apparatus 11 includes a conveyor stage 13 and an ink-jet head unit 15.

The conveyor stage 13 mounts thereon a color reflective display substrate (hereinafter just referred to as substrate) 12 to unidirectionally convey the substrate in good accuracy.

The ink-jet head unit 15 includes an ink-jet head 14 that is supplied with an ink-jet ink to be coated onto the color reflective display. The ink-jet head unit 15 is a device that is able to retain the ink-jet head 14 at a given level from the substrate 12 on the conveyor stage 13 and transfer the ink-jet head 14 in a direction perpendicular to a conveyance direction of the conveyor stage 13.

The ink-jet head 14 includes a plurality of nozzles for ejecting an ink. The plurality of nozzles are arranged at given equal intervals relative to a scanning direction in which the ink-jet head 14 is scanned relative to a colored pixel pattern (hereinafter referred to merely as pixel pattern) of the color filter layer 8.

The ink-jet coating apparatus 11 further includes: an ink-jet head control board 16 that controls the ink-jet ink ejected from the nozzles of the ink-jet head 14; a dryer that dries the inks coated onto the ink fixing layer 7; and an ink tank 19.

In the ink-jet coating apparatus 11, the distance from the nozzles of the ink-jet head 14 to the substrate 12 is set to not less than 300 µm but not more than 2,000 µm to accurately coat the ink onto the substrate 12. If the distance from the nozzles of the ink-jet head 14 to the substrate 12 is less than 300 µm, the ink-jet head 14 and the substrate 12 have a higher risk of being in contact with each other. If the distance from the nozzles of the ink-jet head 14 to the substrate 12 is more than 2,000 µm, ejection misdirection is liable to occur.

The ink-jet coating apparatus 11 includes an ink-jet head maintenance device 17 that recovers the ejection performance of the nozzles of the ink-jet head 14. The ink-jet head maintenance device 17 wipes the nozzle surfaces such as with waste cloth or a film, or has a pot or the like that discharges a liquid. An ordinary maintenance mechanism of the ink-jet head 14 can be used as the ink-jet head maintenance device 17.

The ink-jet head coating apparatus 11 preferably includes a camera used for alignment and an image processing unit, for the positioning of the pixel pattern of the color reflective display.

In the present embodiment, the ink-jet coating apparatus 11 shown in Fig. 2 is used for scanning the ink-jet head 14 having a plurality of nozzles relative to the pixel pattern, and an ink-jet ink is ejected (fed) onto the surface of the substrate 12, where the ink fixing layer 7 is provided, thereby forming an ink-jet ink layer, i.e. the color filter layer 8, on the ink fixing layer 7. In the present embodiment, the ink-jet head 14 having a plurality of nozzles is scanned relative to the pixel pattern. For the scanning, either the substrate 12 or the ink-jet head 14 may be moved. Alternatively, both of the substrate 12 and the ink-jet head 14 may be moved.

In the present embodiment, a pixel shape is approximated to a square shape. Therefore, an ink-jet ejection array depending on the size of a pixel is applied. In the present embodiment, the order of deposition on the array has an influence on the pixel shape and thus is optimally set. The amount of a fluid also influences the pixel shape and thus is set to an optimum value.

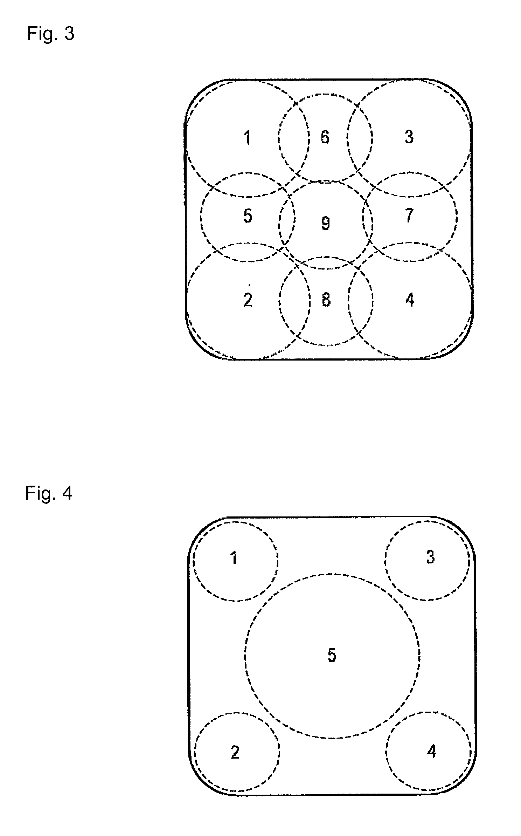

Figs. 3 to 5B show first to fourth examples of a pixel shape and an ejection array pattern.

In the pixel forming method shown in Fig. 3, droplets to be arrayed at four corners of the pixel are deposited prior to the deposition of droplets to be arrayed at other positions of the pixel.

The numerals indicated in Fig. 3 denote an arraying order. If this arraying order is changed and the droplets are successively deposited from one end to the other, the droplets mutually contact and thus, the resulting pixel has a circular shape distorted by the action of the surface tension. When the volume of the droplets arrayed at the four corners of the pixel is set at not less than 1.2 times but not more than 6 times the volume of the droplets arrayed at other positions of the pixel, the sides of the pixel can be more approximated to straight lines. If the volume of the droplets arrayed at the four corners of the pixel is less than 1.2 times the volume of the droplets arrayed at other positions of the pixel, the pixel shape has sides each being swelled at the center. If the volume of the droplets arrayed at the four corners of the pixel is more than 6 times the volume of the droplets arrayed at other positions of the pixel, the pixel shape has sides each being recessed at the center.

In the pixel forming method shown in Fig. 4, droplets to be arrayed at four corners of a pixel are deposited and then a droplet is deposited at the center of the pixel.

In this way, when the droplets to be arrayed at the four corners of the pixel are deposited and then a droplet is deposited at the center portion of the pixel, the droplets arrayed at the four corners prevent the droplet deposited on the center portion of the pixel from being freely wet-spread. Further, the droplet deposited on the center portion of the pixel is wet-spread due to the surface tension toward the droplets deposited on the four corners. As a result, the droplet deposited on the center portion of the pixel is approximated to a square shape. If the volume of the droplet deposited on the center portion of a pixel exceeds 50 times the volume of the droplets arrayed at the four corners of the pixel, the droplets arrayed at the four corners can no longer suppress the wet spreading of the droplet deposited on the center portion of the pixel and thus the pixel shape turns out to be a circular shape. On the other hand, if the volume of the droplet deposited on the center portion of a pixel is not more than 10 times the volume of the droplets arrayed at the four corners of the pixel, the degree of wet spreading of the droplet deposited on the center portion of the pixel is not sufficient and thus the resultant pixel shape has sides each being recessed at the center.

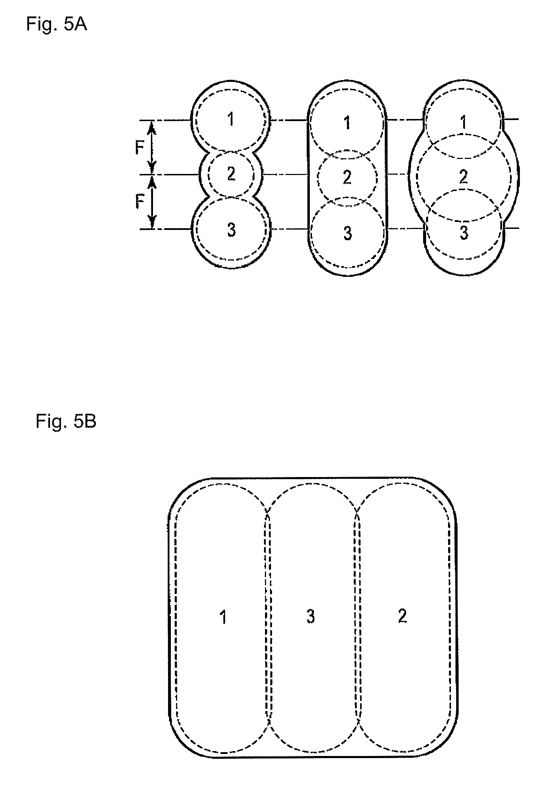

Fig. 5A shows examples of the array pattern shape influenced by the intervals and volumes of ink droplets.

Fig. 5B shows an example of a combination of elongated-hole-shaped array patterns.

As in the array pattern shown at the center of Fig. 5A, the diameters and intervals F are preferably adjusted to form a longitudinally linear array pattern.

If the intervals and volumes of droplets are not optimized, the array pattern shape has a recessed shape as with the left pattern of Fig. 5A, or has a shape swelled at the center portion as in the right pattern of Fig. 5A. For example, when the fluid volume is small at the center portion of an elongated-hole-shaped, colored portion, or when the intervals F of the ink droplets are large, the resultant array pattern may have a recessed shape in some cases. When the fluid volume is large at the center portion of an elongated-hole-shaped, colored portion, or when the interval F of the ink droplets is small, the resultant array pattern is in a shape with a swelled center portion. The fluid volume at the end portions of an elongated-hole-shaped, colored portion is preferred to be not less than 1.2 times but not more than 6 times the fluid volume at the center portion of the elongated-hole-shaped, colored portion.

In Fig. 5B, elongated-hole-shaped, colored portions are formed by successively ejecting an ink toward ink droplet deposition portions.

The numerals indicated in Fig. 5B indicate an array order. If this array order is changed and array patterns are successively deposited from one end to the other end, the elongated-hole-shaped, colored portions may mutually contact and thus the colored portions may form a distorted circular shape due to the surface tension. The number of the elongated-hole-shaped, colored portions to be juxtaposed can be optionally determined, but the array order is preferably such that one side and the opposed side are formed first.

When the array patterns are formed using the method shown in Figs. 5A and 5B, the number of ink-jet coating steps can be reduced over the method, shown in Figs. 3 and 4, in which droplets are deposited at the four corners of a pixel, followed by depositing droplets at other positions of the pixel. Thus, the coating efficiency can be improved.

In the method for making a pixel pattern related to the embodiment, it is preferred that the ink-jet head 14 is oriented such that a component perpendicular to the main scanning direction of the ink-jet head 14 among components of distances between adjacent nozzles of the ink-jet head 14 is one integerth of a component perpendicular to the main scanning direction of the ink-jet head 14 among distances between adjacent pixels forming the same color as the color reflective display, under which an ink-jet ink is ejected and fed to the pixel pattern.

Further, for example, the ink-jet head 14 is preferably arranged as being inclined in the main scanning direction.

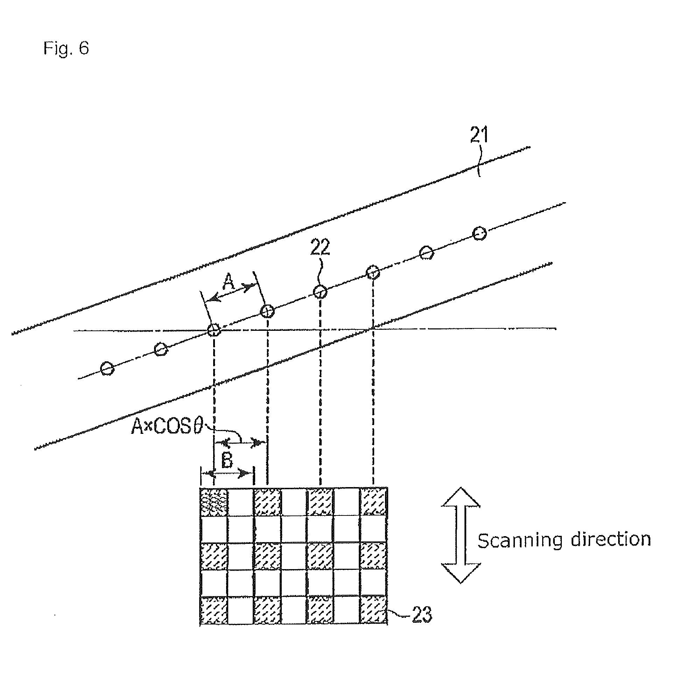

Fig. 6 is a diagram illustrating an example of a relationship of nozzle holes to a nozzle pitch when the ink-jet head 14 is inclined.

Reference number 21 indicates a nozzle surface of the ink-jet head 14, and reference number 22 indicates nozzle holes of the ink-jet head 14. The row of the nozzles of the ink-jet head 14 is arranged as oriented toward the ink fixing layer 7. The nozzle row and the substrate 12 of the color reflective display are relatively scanned. In this case, the ink-jet head 14 is arranged to be so inclined that a component perpendicular to the scanning direction of the ink-jet head 14 among components of nozzle intervals of the ink-jet head is one integerth of a component perpendicular to the scanning direction of the ink-jet head 14. For example, in an array of the ink-jet head 14, a row in which the nozzles are juxtaposed in the ink-jet head 14, i.e. an axis of the nozzle array, is inclined by an arbitrary angle θ relative to the conveyance direction of the substrate 12 of the color reflective display. With the inclination of the nozzle array axis, the nozzle pitch can be adjusted. If a nozzle pitch is taken as "A" in the case where the axis of the nozzle array is not inclined, the nozzle pitch is expressed by "A × cos θ" when the nozzle array axis is inclined by θ. In the case where a pitch B between the pixels to be colored with the same color is predetermined, θ can be calculated to satisfy "cos θ = B÷A" in order to match the nozzle pitch with the pitch B.

When the pitch B is larger than the nozzle pitch A, θ may be determined from "cos θ = B÷2A" by skipping one nozzle. In the embodiment, for example, an ink-jet head of multiphase division driving is used. The ink-jet head of multiphase division driving is driven in such a way that a plurality of phases having periodicity are divided in every phase. In the case of using the ink-jet head of multiphase division driving, one or more of specified phases selected among the plurality of phases are allocated in the step of ejecting an ink-jet ink from the nozzles in accordance with the positions of the nozzles. In this case, the nozzle pitch of the same phase is taken as "A". The ink-jet head 14 performs ejection of controlled fine drops in conformity with timing when a pixel coloring region 23 passes beneath a nozzle.

As another embodiment, an ink-jet head of independent nozzle control may be used. With the independent nozzle control, ejection timings of individual nozzles are conformed with the speed and time in the scanning direction. The ejection operations are performed under the independent nozzle control.

In the method for manufacturing a color reflective display related to the embodiment, the ink-jet head 14 makes use of multiphase division driving. In the multiphase division driving, a plurality of nozzles are allocated to a plurality of phases having periodicity. The step of ejecting an ink-jet ink from the nozzles is carried out while limited to a part of specified phases among the plurality of phases. In contrast, when an ink-jet head capable of independent nozzle control is used, all the nozzles are usable because the phase is one. In the present embodiment, the type of head used is not limited and thus an optional type of head can be used.

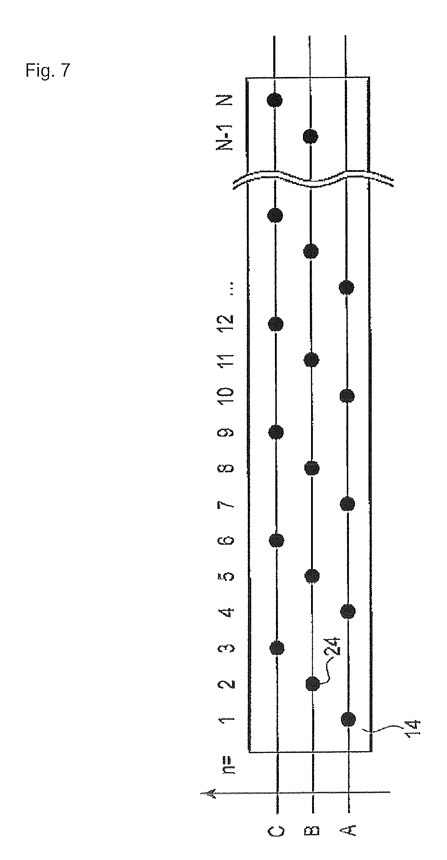

Fig. 7 is an explanatory view illustrating an example of the multiphase division driving in the ink-jet head 14 related to the embodiment. Fig. 7 shows an example of a relationship between the ink-jet head 14 and nozzles 24 arranged in the ink-jet head 14. The ink-jet head 14 includes N number of nozzles 24. For the sake of convenience, the nozzles 24 are sequentially designated with a natural number N as 1, 2, 3 ... from the left end or the right end. The nozzles 24 eject ink. The ejection timing and the number of ejections, the volume of an ejecting ink, and the like, can be independently controlled. The nozzles 24 are divided, for every row, into A-phase nozzles 1, 4, 7 ... (3xN-2), B-phase nozzles 2, 5, 8 ... (3×N-1) and C-phase nozzle 3, 6, 9 ... 3xN. The divided A-, B- and C-phases each have periodicity.

For example, when the A-phase nozzles 1, 4, 7 ... (3xN-2) are used upon ejection of an ink-jet ink, the B-phase nozzles and the C-phase nozzles do not eject the ink-jet ink. Thus, the pressure or the electrical interference of the nearby nozzles can be temporally shifted. As a result, stable ejection is ensured and ejection timing can be easily controlled, leading to more accurate coating of an ink. Further, the ejection from the A-, B- and C-phase nozzles may be switched for every ejection. If an ejection failure takes place in the A phase, the drive phase for ejection may be switched to the B- or C-phase.

In the present embodiment, the materials of a coloring ink may contain, for example, a coloring pigment, a resin, a dispersant and a solvent. The coloring ink may contain fluorine and have liquid repellency. Preferably, the pigments used for an ink are three types of red, green and blue, but any one or two of them may be used. The pigments used for an ink may be yellow, light blue and purple. Combinations of the colors are not limited.

Pigments used as a colorant include: Pigment Reds 9, 19, 38, 43, 97, 122, 123, 144, 149, 166, 168, 177, 179, 180, 192, 215, 216, 208, 216, 217, 220, 223, 224, 226, 227, 228 and 240; Pigment Blues 15, 15:6, 16, 22, 29, 60 and 64; Pigment Greens 7 and 36; Pigment Reds 20, 24, 86, 81, 83, 93, 108, 109, 110, 117, 125, 137, 138, 139, 147, 148, 153, 154, 166, 168 and 185; Pigment Orange 36; and Pigment Violet 23. However, pigments are not limited to these. These pigments may be used by mixing two or more to obtain a desired hue.

Resins used for the materials of coloring inks include casein, gelatin, polyvinyl alcohol, carboxymethyl acetal, polyimide resins, acrylic resins, epoxy resins and melanine resins. The resins for the materials of coloring inks may be appropriately selected on the basis of the relationship between the resin of the coloring ink and a pigment. Where heat resistance or light resistance is required, resins for the coloring inks are preferably acrylic resins.

For improving dispersibility, a dispersant is used. As a polar solvent that is an example of the dispersant, an alkylene oxide having the following general formula (1) is used, in which R¹ of Formula (1) indicates a saturated or unsaturated hydrocarbon group. R² and R³, which are different from each other, indicate an alkylene group having "2" and "3" carbon atoms, respectively. m and n are, respectively, "0" or a positive integer provided that 5≤m+n≤30, with a molecular weight being not larger than 200.

R¹-(R²-O-)ₘ-(R³-O)ₙ-H (1)

Use of the dispersant of this general formula (1) can increase dispersibility of pigments in water, or in a glycol solvent or glycerin.

For improving dispersibility, a dispersant may be used. As a non-ionic surfactant serving as a dispersant, a polyoxyethylene alkyl ether or the like may be used, for example. As an ionic surfactant as a dispersant, mention may be made, for example, of a sodium alkylbenzene sulfonate, a poly fatty acid salt, a fatty acid salt, an alkyl phosphate salt, a tetra alkyl ammonium salt or the like. Besides, a dispersant used may include an organic pigment derivative, a polyester or the like. The dispersants may be used singly or may be used by mixing two or more.

A solvent species used for a coloring ink preferably has a proper range of surface tension of not more than 35 mN/m in ink-jet printing, and a boiling point of not less than 130°C. A surface tension of more than 35 mN/m adversely affects the stability in dot geometry upon ejection for ink-jet printing. If a boiling point is less than 130°C, a tendency to dry out in the vicinity of the nozzles is very high. Eventually, an inconvenient failure such as of nozzle clogging may occur. Specifically, a solvent used includes, but not limited thereto, 2-methoxyethanol, 2-ethoxyethanol, 2-butoxyethanol, 2-ethoxyethyl acetate, 2-butoxyethyl acetate, 2-methoxyethyl acetate, 2-ethoxyethyl ether, 2-(ethoxyethoxy)ethanol, 2-(2-butoxyethoxy)ethanol, 2-(2-ethoxyethoxy)ethyl acetate, 2-(2-butoxyethoxy)ethyl acetate, 2-phenoxyethanol and diethylene glycol dimethyl ether. Any solvent that satisfies the above requirements can be used. As necessary, two or more solvents may be used in admixture.

After the ink is dried and solidified, a protective layer 9 is formed to protect the color filter layer 8. For forming the protective layer 9 of the color filter layer 8, an organic resin, such as polyamide, polyimide, polyurethane, polycarbonate, acrylic or silicone, or an inorganic layer such as of Si₃N₄, SiO₂, SiO, Al₂O₃ or Ta₂O₃ may be formed on a colored pattern surface, for example, by a coating method, such as spin coating, roll coating or printing, or by vapor deposition.

The foregoing embodiments may be variously modified and applied within a range not departing from the spirit of the invention.

### [EXAMPLES]

In examples, a method for making a color filter, printed on a matrix, for use in a reflective display is described.

As a substrate layer 1, a polyethylene terephthalate (PET) film is provided. As a material of an ink fixing layer 7, a material made of a mixture of a urethane resin, toluene, water and IPA is used. A material of an ink fixing layer 7 is coated by means of a die coater so as to have a dry thickness of 6 µm to 8 µm.

Using an ink-jet coating apparatus 11, a lattice pattern is printed on the ink fixing layer 7. The ink used for the printing contains 4% of a pigment, 20% of a synthetic resin, 2% of a dispersant, 65% of diethylene glycol dimethyl ether and 9% of PGM-Ac.

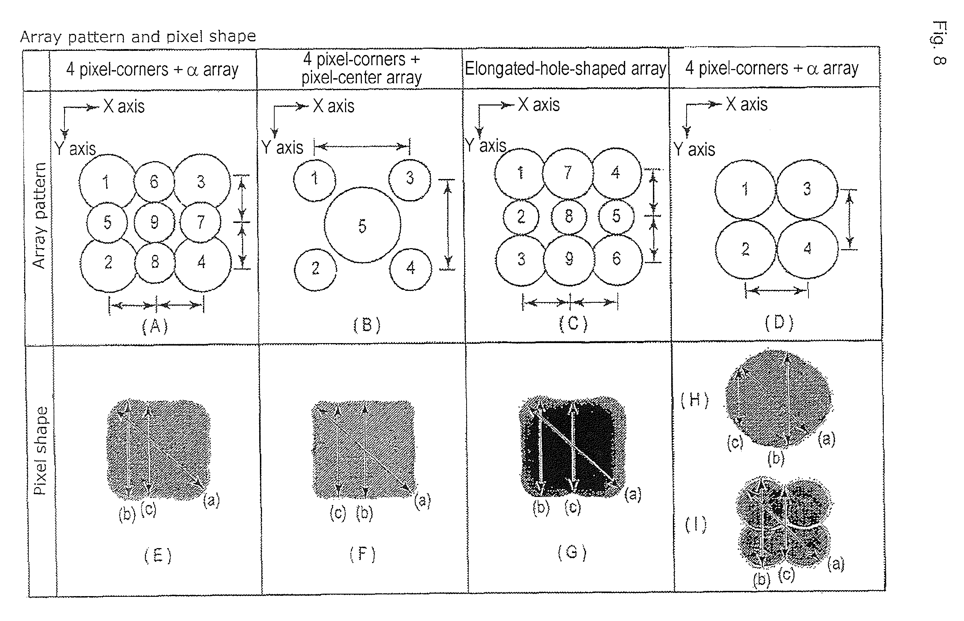

Fig. 8 is a diagram illustrating examples of a relationship between an ejection array pattern and a pixel shape.

The print pattern is coated so as to fit in a pixel size of 120 µm × 120 µm. In the examples shown in Fig. 8, four array patterns are used to form respective colored pixels.

A first array pattern is formed using a method in which droplets to be arrayed at four corners of a pixel are deposited, followed by depositing droplets at other positions of the pixel (see "4 pixel-corners + α array" of Fig. 8).

A second array pattern is formed using a method in which droplets to be arrayed at four corners of a pixel are deposited, followed by depositing a droplet at the center of the pixel (see "4 pixel-corners + pixel-center" of Fig. 8).

A third array pattern is formed using a method in which array patterns each having an elongated-hole shape are combined (see "elongated-hole-shaped pattern array" of Fig. 8).

A fourth array pattern, for comparison, is formed using a method in which deposition positions are located at four corners (see "4 pixel-corners array" of Fig. 8).

The scanning direction of the ink-jet head 14 is taken as y-axis, and a direction perpendicular to the y-axis is taken as x-axis. In order to form a colored pixel of 120 µm × 120 µm, two coating parameters, i.e. a deposition array distance between droplets along x- and y-axes and a volume of droplets ejected from the ink-jet head 14, are changed for optimization of the pixel shape.

### [Example 1]

In Example 1, there is described a method of depositing droplets to be arrayed at four corners of a pixel prior to the deposition of droplets to be arrayed at other positions of the pixel.

Fig. 8(A) shows a first example of an array pattern. The numerical values indicate the order of deposition of droplets. The arrows indicate a scanning direction of the ink-jet head of the ink-jet coating apparatus, as y-axis, and a direction perpendicular to y-axis, as x-axis.

In Fig. 8(A), the volume of the fluid deposited at for corners (1, 2, 3 and 4) enclosed by large circles in the array is adjusted to not less than 1.2 times but not more than 6 times the volume of the fluid deposited at other positions (5, 6, 7 and 8) enclosed by small circles in the array. In Fig. 8(A), intervals along the x-axis, based on the center of the respective droplets, are set to the same value. Intervals along the y-axis, based on the center of the respective droplets, are set to the same value.

Table 1 shows deposition intervals of droplets along the x- and y-axes, fluid volume of droplets arrayed at four corners, and fluid volume of droplets deposited at other positions in the array.

**[Table 1]**

| Table 1: Coating method aiming for a pixel interval of 120 µm, and a/b, a/c and pixel shape (in 4 pixel-corners + α array) | | | | | | |
|---|---|---|---|---|---|---|
| x-axis interval (µm) | y-axis interval (µm) | Volume of droplets arrayed at four corners (pl) | Volume of droplets arrayed at other positions (pl) | a/b | a/c | Shape |
| 20 | 20 | 30 | 28 | 1.21 | 2.31 | X |
| 30 | 30 | 28 | 23 | 1.32 | 1.67 | O |
| 35 | 35 | 26 | 8 | 1.39 | 1.49 | O |
| 40 | 40 | 24 | 4 | 1.37 | 1.61 | O |
| 50 | 50 | 22 | 2 | 1.38 | 2.21 | X |

In Table 1, (a) represents a diagonal line of a colored pixel, (b) represents a maximum distance between a side and the opposed side, and (c) represents a minimum distance between a side and the opposed side. Table 1 shows ratios a/b and a/c of these values and judgement (evaluation) as to appropriateness of the pixel shape. The results of the judgment are shown based on the judgment standards wherein "○" indicates a pixel shape approximated to a square shape and "X" indicates a pixel shape having roundness or recesses.

When a/b≈1.41 and a/c≈1.41, the colored pixel is in a square shape or approximated to a square shape and thus a proper pixel region is ensured in the color filter layer 8.

When a/b<1.15, the colored pixel is approximated to a rounded shape. When 1.15<a/b<1.41 and a/c>1.41, the colored pixel is not in a square shape but has a shape with recessed sides. Neither of these shapes is approximated to a square shape and thus no proper pixel region is ensured.

According to the results of Example 1 shown in Table 1, the pixel shape is approximated to a square shape on condition that the deposition intervals along x- and y-axes are 35 µm, with a/b=1.39 and a/c=1.49. The pixel shape in this case is shown in Fig. 8 by (E). As a result of the experiments, a square pixel shape was not obtained outside the ranges of 1.15<a/b<1.41 and 1.42<a/c<2.0.

### [Example 2]

In Example 2, there is described a method of depositing a droplet at a center portion of the pixel after arraying droplets at four corners of a pixel.

Fig. 8(B) shows a second example of array pattern. In 8(B), the volume of fluid deposited on a position (5) enclosed by a large circle and the volume of fluid deposited on positions (1, 2, 3 and 4) enclosed by small circles are, respectively, adjusted.

Table 2 shows deposition intervals of droplets along x- and y-axes, volume of droplets arrayed at four corners, volume of a droplet deposited at the center of the pixel, values of a/b and a/c, and results of evaluation on pixel shape.

**[Table 2]**

| Table 2: Coating method aiming for a pixel interval of 120 µm, and a/b, a/c, and pixel shape (in 4 pixel-corners + pixel-center array) | | | | | | |
|---|---|---|---|---|---|---|
| x-axis interval (µm) | y-axis interval (µm) | Volume of droplets arrayed at four corners (pl) | Volume of a droplet arrayed at pixel center (pl) | a/b | a/c | Shape |
| 80 | 80 | 650 | 6 | 1.12 | 2.15 | X |
| 80 | 80 | 600 | 12 | 1.31 | 1.61 | O |
| 80 | 80 | 500 | 12 | 1.40 | 1.45 | O |
| 80 | 80 | 400 | 12 | 1.40 | 1.58 | O |
| 80 | 80 | 350 | 36 | 1.39 | 2.11 | X |

In Table 2, the intervals along the x- and y-axes indicate deposition intervals between the positions (1, 2, 3 and 4) enclosed by small circles.

According to the results of Example 2 shown in Table 2, the pixel shape is approximated to a square shape on condition that the deposition intervals along the x- and y-axes are 80 µm, the volume of the droplets arrayed at four corners of the pixel is 18 pl, and the volume of the droplet arrayed at the center portion of the pixel is 250 pl. The pixel shape in this case is shown in Fig. 8 by (F). As a result of the experiments, a square pixel shape was not obtained outside the ranges of 1.15<a/b<1.41 and 1.42<a/c<2.0.

### [Example 3]

In Example 3, a method of combining array patterns, each having an elongated-hole shape, is described.

Fig. 8(C) shows a third example of array pattern. In Fig. 8(C), the volume of fluid deposited at positions (1, 3, 4, 6, 7 and 9) enclosed by large circles is adjusted to not less than 1.2 times but not more than 6 times the volume of fluid deposited at positions (2, 5 and 8) enclosed by small circles.

Table 3 shows the deposition intervals of the droplets along the x- and y-axes, volume of droplets arrayed along one side and the opposed side of a pixel, volume of droplets deposited on other arrays, values of a/b and a/c, and the results of evaluation on pixel shape.

**[Table 3]**

| Table 3: Coating method aiming for a pixel interval of 120 µm, and a/b, a/c, and pixel shape (in elongated-hole-shaped array) | | | | | | |
|---|---|---|---|---|---|---|
| x-axis interval (µm) | y-axis interval (µm) | Volume of droplets arrayed along one side and the opposed side of pixel (pl) | Volume of droplets arrayed at other positions (pl) | a/b | a/c | Shape |
| 20 | 20 | 28 | 26 | 1.12 | 2.13 | X |
| 30 | 30 | 26 | 22 | 1.31 | 1.82 | O |
| 35 | 35 | 24 | 10 | 1.39 | 1.48 | O |
| 40 | 40 | 22 | 4 | 1.38 | 1.58 | O |
| 50 | 50 | 20 | 2 | 1.39 | 2.12 | X |

The intervals along x- and y-axes in Table 3 indicate deposition intervals in Fig. 8(C).

According to the results of Example 3, the pixel shape is approximated to a square shape on condition that the deposition intervals along the x- and y-axes are 35 µm, with a/b being 1.42. The pixel shape in this case is shown in Fig. 8 (G). As a result of the experiments, a square pixel shape was not obtained outside the ranges of 1.15<a/b<1.41 and 1.42<a/b<2.0.

### [Example 4]

Fig. 8(D) shows an example, as a comparison, of an array pattern in which droplets are arrayed at four corners of a pixel.

Table 4 shows, for comparison, the results of forming a colored pixel using a method of arraying droplets at four corners of a pixel.

**[Table 4]**

| Table 4: Coating method aiming for a pixel interval of 120 µm, and a/b, a/c, and pixel shape (in 4 pixel-corners array) | | | | | | |
|---|---|---|---|---|---|---|
| x-axis interval (µm) | y-axis interval (µm) | Volume of droplets arrayed at four corners (pl) | Minimum fluid volume (pl) | a/b | a/c | Shape |
| 20 | 20 | 60 | - | 1.02 | 2.53 | X |
| 30 | 30 | 48 | - | 1.08 | 2.24 | X |
| 40 | 40 | 30 | - | 1.32 | 2.12 | X |
| 50 | 50 | 24 | - | 1.40 | 2.51 | X |

When the intervals along the x- and y-axes are short (not less than 20 µm but not more than 30 µm), the droplets to be deposited are each required to have a large diameter in order to form a pixel having sides of 120 µm. This increases the volume of droplets (not less than 48 pl but not more than 60 pl). Accordingly, as shown in Fig. 8 by (H), the pixel shape is rounded, with a/b being not more than 1.2 and a/c being not less than 2.0.

On the other hand, when the intervals along the x- and y-axes are long (not less than 40 µm but not more than50 µm), the droplets to be deposited are required to have a small diameter. This decreases the volume of droplets. Accordingly, as shown in Fig. 8(I), the pixel shape is recessed, with a/c being not less than 2.1.

As a result, in the method of arraying droplets at four corners of a pixel, a colored pixel having a square shape effectively occupied with a pixel region was not formed.

As described above, in the methods described in Examples 1 and 2, the fluid volume ratio is adjusted, while the droplets to be arrayed at four corners of a pixel are deposited prior to the deposition of droplets to be arrayed at other positions of the pixel. In the method described in Example 3, the fluid volume ratio is adjusted, while the array patterns each having an elongated-hole shape are combined. These methods are able to approximate a/b to 1.41 in forming a colored pixel and thus is able to form a colored pixel with a shape approximated to a square shape effectively occupied with a pixel region, compared to the method of locating deposition positions at four corners of a pixel as described in Example 4.

## Claims

1. A method for manufacturing a color filter comprising forming a colored pixel of the color filter by arraying a plurality of droplets at arbitrary intervals by ink-jet printing, **characterized by** comprising:
coating droplets to be arrayed at four corners of the colored pixel, and subsequently coating droplets to be arrayed at other positions of the color pixel.

2. The method for manufacturing a color filter according to claim 1, **characterized in that** a volume of droplets to be arrayed at four corners of the colored pixel is not less than 1.2 times but not more than 6 times a volume of droplets to be arrayed at other positions of the colored pixel.

3. The method for manufacturing a color filter according to claim 1, **characterized by** comprising coating droplets to be arrayed at four corners of the colored filter and subsequently coating a droplet onto a center of the colored pixel, wherein a volume of the droplet to be coated onto the center is not less than 10 times but not more than 50 times a volume of droplets to be arrayed at the four corners.

4. A method for manufacturing a color filter comprising forming a colored pixel of the color filter by arraying a plurality of droplets at arbitrary intervals by ink-jet printing, **characterized by** comprising coating droplets to be arrayed along one side and a side opposed to the one side of the colored pixel, and subsequently coating droplets to be arrayed at other positions of the colored pixel.

5. The method for manufacturing a color filter according to claim 4, **characterized in that** a volume of droplets to be arrayed along the one side and a side opposed to the one side is not less than 1.2 times but not more than 6 times a volume of droplets to be arrayed at the other positions.

6. A color reflective display comprising a color filter layer manufactured using the method for manufacturing a color filter recited in claim 1, **characterized in that**:
the reflective display includes a configuration in which an ink fixing layer and the color filter layer are stacked one on another, wherein when "a" is a length of a diagonal line of the colored pixel in the ink fixing layer, and "b" is a maximum value of a minimum distance from one side to a side opposed to the one side of the colored pixel, 1.15<a/b<1.41 is satisfied, and when "c" is a minimum value of a minimum distance from one side to a side opposed to the one side of the colored pixel, 1.42<a/c<2.0 is satisfied,.

7. A color reflective display comprising a color filter layer manufactured using the method for manufacturing a color filter recited in claim 4, **characterized in that**:
the reflective display includes a configuration in which an ink fixing layer and the color filter layer are stacked one on another, wherein when "a" is a length of a diagonal line of the colored pixel in the ink fixing layer, and "b" is a maximum value of a minimum distance from one side to a side opposed to the one side of the colored pixel, 1.15<a/b<1.41 is satisfied, and when "c" is a minimum value of a minimum distance from one side to a side opposed to the one side of the colored pixel, 1.42<a/c<2.0 is satisfied.
